# EUROPÄISCHE PATENTANMELDUNG

(11) **EP 1 841 029 A2**
(43) Veröffentlichungstag der Anmeldung: **03.10.2007**
(21) Anmeldenummer: 07450043.0
(22) Anmeldetag: 09.03.2007
(51) Int. Cl.: H02G 3/22

(54) **Dichtung aus einem Elastomer, insbesondere Silikon**

(30) Priorität: 29.03.2006 AT 5302006
(71) Anmelder: Sterner, Franz, 4614 Marchtrenk (AT)
(72) Erfinder: Sterner, Franz, 4614 Marchtrenk (AT)
(74) Vertreter: Hübscher, Helmut

(57) **Zusammenfassung**

Bei einer Dichtung (1) aus einem Elastomer, insbesondere Silikon, zur abgedichteten Durchführung mehrerer, insbesondere mit Kontaktklemmen versehener einaderiger Kabel (7) in ein mit Boden und Abschlußdeckel (3) versehenes Gehäuse (2), welche Dichtung (1) für die Kabel nebeneinander Durchführungsöffnungen (4, 5, 6) aufweist, deren Durchmesser kleiner als der Isolationsdurchmesser der Kabel (7) ist, sind die Durchführungsöffnungen (4, 5, 6) der Dichtung (1) untereinander durch Schlitze (8) verbunden und der Abschlußdeckel (3) ist im Sinne eines Schließens der Schlitze (8) und Andrückens der Öffnungsränder unter elastischer Verformung der Dichtung (1) an die eingeführten Kabel (7) andrückbar und in der Andrückstellung im Gehäuse (2) befestigbar.

## Beschreibung

Die Erfindung bezieht sich auf eine Dichtung aus einem Elastomer, insbesondere Silikon, zur abgedichteten Durchführung mehrerer, insbesondere mit Kontaktklemmen versehener einaderiger Kabel in ein mit Boden und Abschlußdeckel versehenes Gehäuse, welche Dichtung für die Kabel nebeneinander Durchführungsöffnungen aufweist, deren Durchmesser kleiner als der Isolationsdurchmesser der Kabel ist.

Bei bekannten, meist mattenförmigen Dichtungen dieser Art ist es notwendig, den Durchmesser der Durchführungsöffnungen für das Kabel, z. B. um 40 %, wesentlich kleiner als den Isolationsdurchmesser des Kabels zu wählen, um eine ausreichende Abdichtung zu erzielen. Dies bedingt einen beträchtlichen Kraftaufwand beim Einschieben der Kabel. Aus praktischen Gründen müssen bei der Massenfertigung die Kabel schon vor dem Einschieben mit Kontaktklemmen ausgestattet werden, die vorzugsweise durch Krimpen an Kabel und Leiter befestigt sind. Diese haben in der Fertigung oft scharfe, leicht vorstehende Teile, so daß es, um Beschädigungen oder ein Unbrauchbarwerden der Dichtungen zu vermeiden, in der Praxis notwendig wird, eine Nachbearbeitung, z. B. durch Nachschleifen scharfkantiger Ränder vorzunehmen, was einen zusätzlichen Bearbeitungsschritt und damit erhöhte Gesamtkosten bedingt. Auch das Einlegen der Kabel wird durch den größeren Kraftaufwand verzögert und umständlich, da ein Abknicken oder Verbiegen des Kabels im Einführbereich vermieden werden muß.

Aufgabe ist die Beseitigung der aufgezeigten Nachteile und die Schaffung einer Dichtung, in die auch mit nicht nachbearbeiteten Kontaktklemmen versehene Kabel unter geringen Kraftaufwand und damit geringer Knick- oder Verbiegungsgefahr eingelegt werden können und bei der trotzdem eine einwandfreie Abdichtung gewährleistet wird.

Die gestellte Aufgabe wird dadurch gelöst, daß die Durchführungsöffnungen der Dichtung untereinander durch Schlitze verbunden sind und der Abschlußdeckel im Sinne eines Schließens der Schlitze und Andrückens der Öffnungsränder an die eingeführten Kabel unter elastischer Verformung der Dichtung an diese Kabel andrückbar und in der Andrückstellung im Gehäuse befestigbar ist.

Durch die Schlitze erhält die Dichtungsmatte eine größere Nachgiebigkeit und kann sich beim Einschieben der Kabel in die Öffnungen auch nach den Schlitzen aufweiten.

Nach einer Weiterbildung besteht die Dichtung sogar aus zwei nach den Schlitzen vollständig geteilten Hälften.

Das notwendige Anpressen der Öffnungswandungen und das Zusammenpressen des oder der Schlitze wird dadurch einfach möglich, daß der Dichtungskörper im entspannten Einbauzustand schräge oder gewölbte, zu den Durchführungsöffnungen geneigte Außenbereiche aufweist, die sich in der Einspannstellung an der Gehäusewandung abstützend flach oder flacher einstellen und dadurch den oder die Schlitze schließen und die Durchführungsöffnung verengen.

Nach einer anderen Möglichkeit ist der Abschlußdeckel und bzw. oder der Boden des Gehäuses mit gegen die Dichtung gerichteten, z. B. keilförmigen Leitflächen zur Verdrängung des von ihm beaufschlagten Dichtungsmaterials in Richtung der Schlitze und der Durchführungsöffnungen versehen.

Konstruktiv besteht die Möglichkeit, den Abschlußdeckel in der Andrückstellung an die Dichtung über eine Schnapphalterung oder eine Schweiß- oder Klebenaht am Gehäuse zu befestigen.

Nach einer Variante kann auch das Gehäuse aus zwei gegengleichen in der Andrückstellung der Dichtung an die Kabel zusammenschnappbaren Hälften bestehen.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen:
- Fig. 1: eine erfindungsgemäße Dichtung bei abgenommenem Abschlußdeckel in Draufsicht,
- Fig. 2: den Zustand der Dichtung beim Einlegen des Kabels im Schnitt nach der Linie II-II nach der Fig. 1,
- Fig. 3: in der Fig. 2 entsprechender Darstellungsweise den Zustand nach dem Andrücken des Abschlußdeckels und die
- Fig. 4: und 5 in der Darstellungsweise nach der Fig. 2 zwei weitere Varianten der Dichtung.

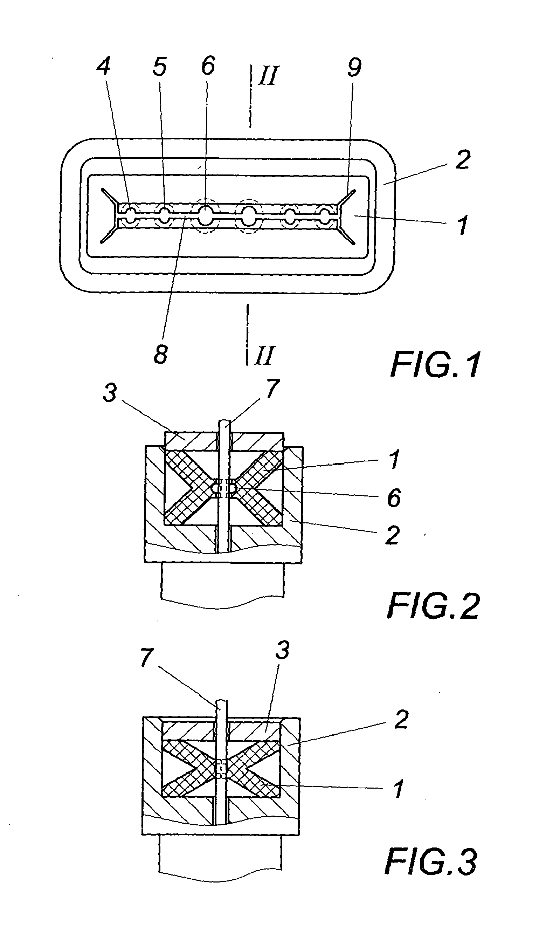

Für die Aufnahme einer Dichtungsmatte 1 ausgebildeten Dichtung ist ein Gehäuse 2 vorgesehen, das durch einen Abschlußdeckel 3 verschließbar ist, der nach Fig. 3 in einer Einführstellung mit dem Gehäuse 2 fest verbunden werden kann. Für die Verbindung in der Stellung nach Fig. 3 kommen Schwei-ßungen, z. B. Ultraschallschweißungen oder auch Klebungen in Frage. Es ist auch möglich, den Abschlußdeckel 3 mit dem Gehäuse 2 durch eine Schnapphalterung zu verbinden. Gehäuse 2 und Abschlußdeckel 3 sind vorzugsweise aus thermoplastischem Kunststoff hergestellt.

Die Dichtungsmatte 1 hat nach den Ausführungen nach Fig. 1 bis 3 einen im wesentlichen X-förmigen Querschnitt, wobei in der Verbindung der beiden X-Schenkel Durchführungsöffnungen 4, 5, 6 für einaderige Kabel, z. B. 7, vorgesehen sind, welche Durchführungsöffnungen 4, 5, 6 durch Schlitze 8 verbunden sind. Zur Erhöhung der Elastizität hat die Dichtungsmatte 1 an die äußeren Schlitzenden anschließende Einschnitte 9.

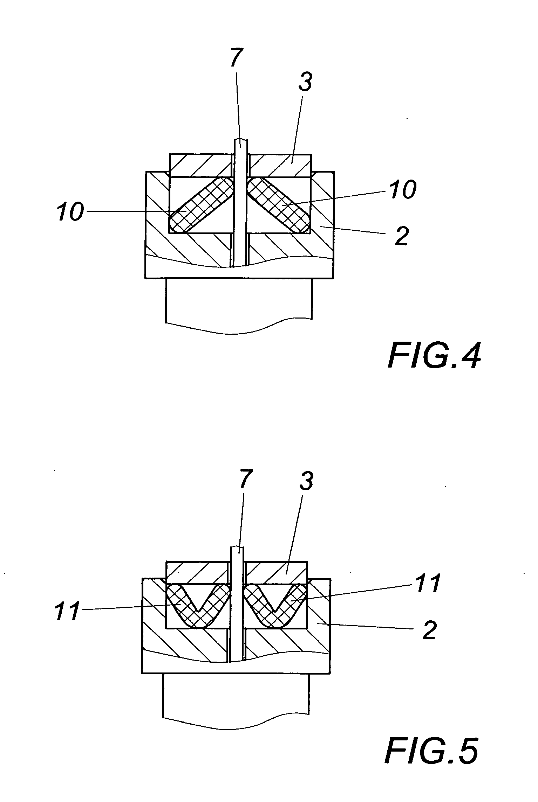

Nach dem Einführen der Kabel 7 nach Fig. 2 wird der Abschlußdeckel 3 in das Gehäuse 2 eingedrückt und, wie beschrieben, befestigt. Dadurch ändert sich die Schräglage der X-Schenkel, so daß sie die Schlitze 8, 9 zusammendrücken und auch die Wandungen der Durchführungsöffnungen 4, 5, 6 an den Mantel des Kabels anpressen, so daß eine einwandfreie Abdichtung erzielt ist. Bei der Ausführung nach Fig. 4 werden zwei durch den Schlitz geteilte Dichtungshälften 10 wie dargestellt schräg in das Gehäuse 2 eingelegt, so daß sie beim Festdrücken des Abschlußdeckels 3 wieder ihre Abdichtstellung einnehmen.

Gleiches gilt für die Ausführung nach Fig. 5, nach der zwei Dichtungshälften mit V-förmigen Querschnitt wie dargestellt eingelegt werden, so daß sie sich beim Eindrücken des Abschlußdeckels 3 abdichtend an die Kabel 7 anlegen und gleichzeitig der erwähnte Trennschlitz geschlossen wird.

## Patentansprüche

1. Dichtung (1) aus einem Elastomer, insbesondere Silikon, zur abgedichteten Durchführung mehrerer, insbesondere mit Kontaktklemmen versehener einaderiger Kabel (7) in ein mit Boden und Abschlußdeckel (3) versehenes Gehäuse (2), welche Dichtung (1) für die Kabel nebeneinander Durchführungsöffnungen (4, 5, 6) aufweist, deren Durchmesser kleiner als der Isolationsdurchmesser der Kabel (7) ist, **dadurch gekennzeichnet, daß** die Durchführungsöffnungen (4, 5, 6) der Dichtung (1, 10, 11) untereinander durch Schlitze (8) verbunden sind und der Abschlußdeckel (3) im Sinne eines Schließens der Schlitze (8) und Andrückens der Öffnungsränder unter elastischer Verformung der Dichtung an die eingeführten Kabel (7) andrückbar und in der Andrückstellung im Gehäuse (2) befestigbar ist.

2. Dichtung nach Anspruch 1, **dadurch gekennzeichnet, daß** die Dichtung aus zwei nach den Schlitzen vollständig geteilten Hälften (10, 11) besteht.

3. Dichtung nach Anspruch 1 oder 2, **dadurch gekennzeichnet, daß** der Dichtungskörper (1, 10, 11) im entspannten Einbauzustand schräge oder gewölbte, zu den Durchführungsöffnungen geneigte Außenbereiche aufweist, die sich in der Einspannstellung an der Gehäusewandung (2) abstützend flach oder flacher einstellen und **dadurch** den oder die Schlitze (8) schließen und die Durchführungsöffnung (4, 5, 6) verengen.

4. Dichtung nach einem der Ansprüche 1 bis 3, **dadurch gekennzeichnet, daß** der Abschlußdeckel (3)und bzw. oder der Boden des Gehäuses (2) mit gegen die Dichtung (1, 10, 11) gerichteten, z. B. keilförmigen Leitflächen zur Verdrängung des von ihm beaufschlagten Dichtungsmaterials in Richtung der Schlitze (8) und der Durchführungsöffnungen (4, 5, 6) versehen ist.

5. Dichtung nach einem der Ansprüche 1 bis 4, **dadurch gekennzeichnet, daß** der Abschlußdeckel (3) in der Andrückstellung an die Dichtung (1, 10, 11) über eine Schnapphalterung oder eine Schweiß- oder Klebenaht am Gehäuse (2) befestigt, ist.

6. Dichtung nach einem der Ansprüche 1 bis 4, **dadurch gekennzeichnet, daß** das Gehäuse aus zwei gegengleichen in der Andrückstellung an die Kabel zusammenschnappbaren Hälften besteht.
